# EUROPEAN PATENT APPLICATION

(11) **EP 2 144 419 A1**
(43) Date of publication of application: **13.01.2010**
(21) Application number: 08012614.7
(22) Date of filing: 11.07.2008
(51) Int. Cl.: H04L 29/06

(54) **A peer-to-peer streaming network**

(71) Applicant: Siemens Aktiengesellschaft, 80333 München (DE)
(72) Inventor: Southall, Alan, 81247 München (DE)

(57) **Abstract**

The present invention relates to a peer-to-peer network (1) comprising at least one streaming server (2) connected to peer computers (5) by means of a core network (3), wherein said streaming server sends (2) a data stream to a peer computer (5) according to a predetermined data distribution tree via said core network (3), wherein the peer computer (5) relays said data stream via local connections (7) to other devices in its vicinity.

## Description

The invention relates to a peer-to-peer streaming network for streaming data and in particular for streaming multimedia data.

A peer-to-peer computer network uses diversed connectivity between participants in the network and uses cumulative bandwidth of the network participants to exchange data.

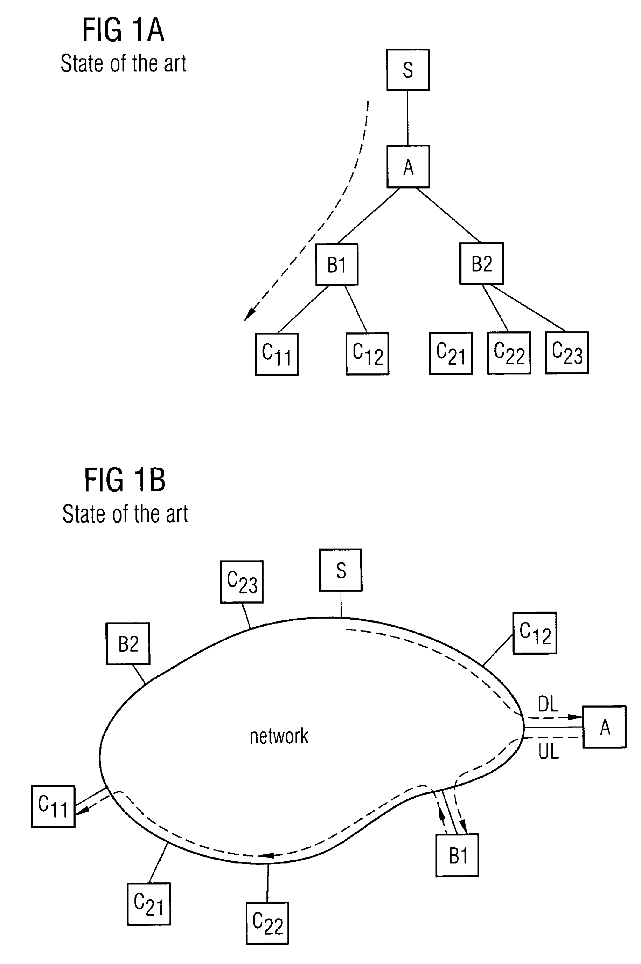

A disadvantage of conventional peer-to-peer networks used for streaming data by means of the Internet is the asymmetric nature of current DSL broadband connections connecting computers to the Internet as illustrated by figures 1A, 1B. Figure 1A shows a simple data distribution tree wherein a streaming server S streams data to a peer computer via other peer computers. In the given example, the streaming server S streams a data stream to a peer computer A and further via a peer computer B1 to the peer computer C11, Figure 1B illustrates the flow of the data stream from the streaming server S via computers A, B1 to computer C11, wherein all computers are connected to a core network, i.e. the Internet via a broadband data connection such as a DSL (Digital Subscriber Line) connection. The DSL-connection is asymmetric because in general the downlink data rate is higher than the uplink data rate. For example, in a typical DSL-connection the downlink data rate is 1 Mbit/s and the uplink data rate is 256 Kbit/s. Consequently, the low uplink data rate of the DSL-connection forms a bottleneck for forwarding data along the data distribution tree. A further disadvantages of conventional data streaming as shown in Fig. 1B is that in a data distribution tree having several levels as shown in Fig. 1A the destination computers forming the leaves of the tree do not receive data if one of the peer computers along the data path in the distribution tree becomes defect and cannot forward the data. For example, if peer computer B1 becomes defect, computer C11 does not receive a multimedia data stream from the streaming server S.

To avoid the bottle neck of a DSL connection having a low uplink data rate in multisource streaming a peer computer receiving data from another peer computer, i.e. a peer computer further down in the distribution hierarchy receiving data from another peer computer higher in the hierarchy, receives data from multiple peers, in order to view the original multimedia data stream. In multi-source streaming multiple peer computers stream sections of the data stream to a peer computer which is lower in the respective distribution tree. An example for multi-source streaming is Heterogeneous Asynchronous Multi-source Streaming (HAMS). In HAMS a data stream comprising several frames is split and later reassembled at the destination peer computer. A disadvantage of multi-source streaming is that it is very complex and hard to manage. Furthermore, multi-source streaming is not very reliable.

Accordingly, it is an object of the present to provide a peer-to- peer network which allows reliable data streaming with a high data transmission rate.

This object is achieved by a peer-to-peer network comprising the features of claim 1.

The invention provides a peer-to-peer network comprising at least one streaming server connected to peer computers by means of a core network, wherein said streaming server sends the data stream to a peer computer according to a predetermined data distribution tree via said core network, wherein said peer computer relays said data stream via local connections to other devices in its vicinity.

In an embodiment of the peer-to-peer network according to the present invention, the local connections are formed by wireless local area connections.

In an alternative embodiment of the peer-to-peer network according to the present invention, the local area connections are formed by wired local area connections.

In a possible embodiment of the peer-to-peer network according to the present invention said wired local area connections are formed by powerline connections.

In an embodiment of the peer-to-peer network according to the present invention, the peer computers are connected to the core network via a symmetric or asymmetric broad band connection.

In a possible embodiment of the peer-to-peer network according to the present invention, the broad band connection is a DSL (digital subscriber line)-connection.

In an embodiment of the peer-to-peer network according to the present invention, the devices are peer computers connected to the core network.

In a possible embodiment of the peer-to-peer network according to the present invention, the devices forward the data stream to other computers of said peer-to-peer network which a lower down in the distribution tree of said peer-to-peer network.

The invention further provides a peer computer of a peer-to-peer network, which relays a data stream received from a streaming server by means of a core network via local area network connections to other devices in its vicinity according to a predetermined data distribution tree of said peer-to-peer network.

The invention further provides a method for streaming data between computers of a peer-to-peer network according to a predetermined data distribution tree of said peer-to-peer network,
wherein a computer of said peer-to-peer network which receives a data stream relays the data stream via local area network connections to other devices in its vicinity.

The invention further provides a computer program comprising commands for performing a method for streaming data between computers of a peer-to-peer network according to a predetermined data distribution tree of said peer-to-peer network,
wherein a computer of said peer-to-peer network which receives a data stream relays the data stream via local network connections to other devices in its vicinity.

The invention further provides a data carrier for storing such a computer program.

In the following preferred embodiments of the method and apparatus according to present invention are described with reference to the enclosed figures.

Fig. 1A, 1B illustrate conventional data streaming in a computer network according to the state of the art;

Fig. 2 shows an exemplary embodiment of a peer-to-peer network for streaming data according to the present invention.

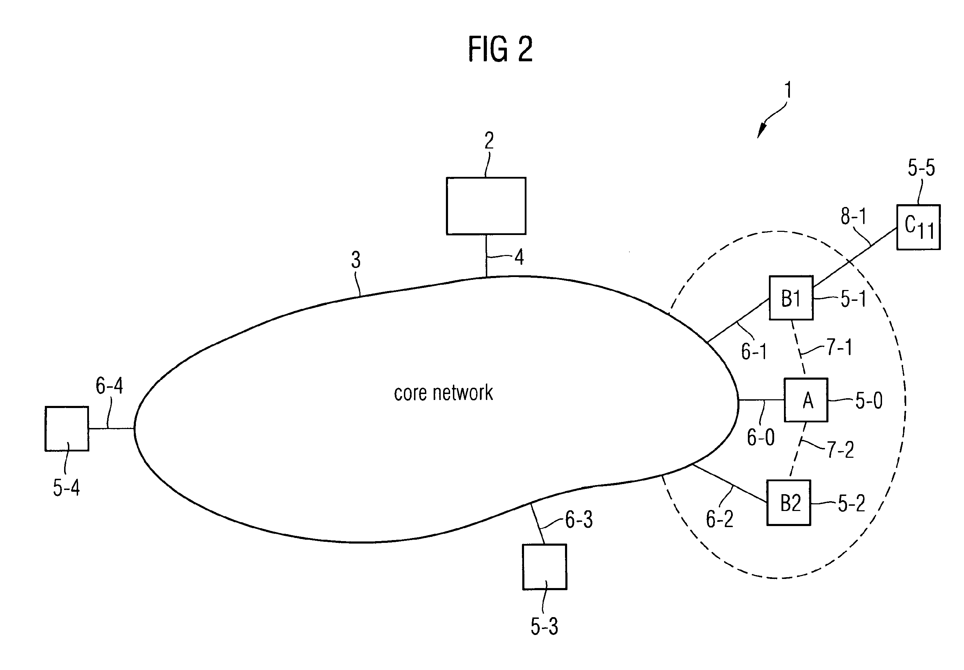

As can be seen in Fig. 2 a peer-to-peer network 1 for streaming data according to the present invention comprises at least one streaming server 2 which provides a data stream such as a multimedia data stream. The streaming server 2 is connected to a core network 3 via a symmetric or asymmetric broad band data connection 4. The core network 3 is formed in a possible embodiment by a wide area network such as the Internet. A plurality of peer computers 5 is also provided. In the example of Fig. 2 five peer computers 5-0 to 5-5 are shown. In the embodiment shown in Fig. 2 peer computers 5-0 to 5-4 are connected to the core network 3 by a broad band data connection 6 such as a DSL-connection. As can be seen in Fig. 2 the peer computer 5-0 is further connected to other peer computers 5-1, 5-2 in its vicinity via local area connections 7-1, 7-2. In a possible embodiment the local connection is formed by a wireless local area connection such as a WLAN-connection and the other peer computers 5-1, 5-2 are located within the transmission range of the relaying peer computer 5-0. In alternative embodiments the local area connection is formed by other wireless connections such as a ZigBee wireless connection or an UMTS-connection. In a further alternative embodiment, the local connection can be formed by a wired local area connection for example by a powerline connection or by a data line of a bus.

In the peer-to-peer network according to the present invention when the data streaming server 2 sends a data stream to a destination peer computer such as a peer computer 5-1 according to a predetermined data distribution tree as shown in Fig. 1A. The streaming server sends the data stream to a peer computer 5-0 which relays the data stream via the corresponding local area connection 7-1 to the destination computer 5-1. Accordingly, the streaming server 2 sends the data stream to the IP-address of the peer computer 5-0 which forwards the data stream to the local network address of the destination computer 5-1. In the peer-to-peer network 1 according to the present invention, a local connection is used instead of a DSL uplink connection to stream sections of a received multi-media data stream to peer computers lower down in the distribution tree. In the example shown in Fig. 2 a media data stream is streamed to the peer computers 5-1, 5-2 via peer computer 5-0 which receives the data stream from the streaming server 2 over a broad band connection 6-0 such as a DSL-connection. The peer computer 5-0 receives the data stream from the streaming server 2 in a downlink connection DL having a high data transmission rate. A data transmission over the broad band connection in an uplink UL with a low data transmission rate is avoided.

In a preferred embodiment wireless connection 7-1, 7-2 are formed by WLAN-connections, wherein the peer computers 5-1, 5-2 are within the transmission range of the peer computer 5-0. In the embodiment shown in Fig. 2, the peer computers 5-1, 5-2 are connected additionally via their own broad band connections 6-1, 6-2 to the core network 3. In an alternative embodiment, the peer computers 5-1, 5-2 are not connected by means of a wired link to the core network 3 and can form mobile devices.

The peer computers 5-1, 5-2 which are in the transmission range of the peer computer 5-0 receiving the data stream from the streaming server 2 first try to discover other peers in the vicinity using wireless LAN which are viewing the same data stream that they wish to watch e.g. "World Cup England vs. Germany". During this discovery process peer computers 5-1, 5-2 find the peer computer 5-0 and establish a wireless connection to peer computer 5-0 which forwards the data stream to the receiving peer computers 5-1, 5-2. In a possible embodiment peer computer 5-0 forwards the data stream by using IP broadcasting. In a possible embodiment, the peer-to-peer network 1 according to the present invention implements a flat distribution tree having only two hierarchy levels, i.e. computers of a first level such as peer computer 5-0 which relay data streams to other peer computers, and peer computers of a second level such as peer computers 5-1, 5-2 which are connected to relaying peer computers of the first level via a local connection.

In an alternative embodiment the peer-to-peer network 1 according to the present invention device receiving a relayed data stream to a peer computer via a local area data connection forwards the data stream to other computers of the peer-to-peer network 1 which are further a down in the distribution tree of the peer-to-peer network. For example, peer computer 5-1 can transmit in this embodiment a data stream relayed by peer computer 5-0 via the local area connection 7-1 further via a data connection 8-1 to another peer computer 5-5 which is lower down in the hierarchy of the distribution tree. As can be seen in Fig. 2, the further device 5-5 can be formed by another peer-to-peer-computer which can be outside the transmission range of the relaying computer 5-0 as indicated by a dashed line.

In a preferred embodiment, the peer-to-peer network 1 according to the present invention implements a flat distribution trees to increase reliability. For example, if peer-computer 5-0 fails peer computers 5-1, 5-2 can join the data stream originating from the streaming server 2. By using a local connection instead of a DSL uplink to stream data sections of the received data stream to peers lower down in the distribution tree a much simpler form of peer-to-peer data streaming can be achieved by the peer-to-peer network 1 according to the present invention which avoids complex and sensitive multisource streaming algorithms and allows single-source data streaming to other peer computers over a high bandwith local connection. The high bandwith local connection can be formed by a wireless or by a wired connection. In a preferred embodiment of the peer-to-peer network 1 according to the present invention a highband width wireless connection 7-1, 7-2 as shown in Fig. 2 are WLAN connections. The peer-to-peer network 1 according to the present invention can be used for any kind of multi-media data streams. In a possible embodiment, the peer-to-peer computer which relays the data stream forms a DSL-router. According to a further exemplary embodiment the peer-to-peer computer which relays the data stream to other devices in the vicinity forms a top box. The broad band connection connecting the peer computers to the core network 3 can be formed by any symmetric or asymmetric broad band data connection such as DSL, a glass fibre connection, a cable connection or an UMTS connection. According to a possible embodiment, the peer computer 5 can also be formed by mobile devices.

## Claims

1. A peer-to-peer network (1) comprising
at least one streaming server (2) connected to peer computers (5) by means of a core network (3),
wherein said streaming server (2) sends a data stream to a peer computer (5) according to a predetermined data distribution tree via said core network (3),
wherein the peer computer (5) relays said data stream via local connections (7) to other devices in its vicinity.

2. The peer-to-peer network according to claim 1,
wherein said local connection (7) is a wireless local area connection.

3. The peer-to-peer network according to claim 1,
wherein said local connection (7) is wired local area connection.

4. The peer-to-peer network according to claim 3,
wherein said wired local area connection (7) is a power line connection or a data line of a data bus.

5. The peer-to-peer network according to claims 1 to 4,
wherein said peer computers (5) are connected to said core network (3) via a symmetric or asymmetric broadband connection (6).

6. The peer-to-peer network according to claim 5,
wherein said broadband connection (6) is a DSL-connection.

7. The peer-to-peer network according to claim 1,
wherein said devices are peer computers connected to said core network (3).

8. The peer-to-peer network according to claim 1,
wherein said devices forward the data stream to other devices (5-5) of said peer-to-peer network (1) which are lower down in said distribution-tree of said peer-to-peer network (1).

9. A peer computer (5) of a peer-to-peer network (1) which relays a data stream received from a streaming server (2) by means of a core network (3) via local network connections (7) to other devices in its vicinity according to a predetermined data distribution tree of said peer-to-peer network (1).

10. A method for streaming data between computers of a peer-to-peer network (1) according to a predetermined data distribution-tree of said peer-to-peer network,
wherein a computer (5) of said peer-to-peer network (1) which receives a data stream from a core network (3) relays said data stream via local network connections (7) to other devices in its vicinity.

11. A computer program comprising commands for performing the method according to claim 10.

12. A data carrier which stores a computer program according to claim 11.

## Amended claims

### Amended claims in accordance with Rule 137(2) EPC.

**1.** A peer-to-peer network (1) comprising
at least one streaming server (2) connected to peer computers (5) by means of a core network (3),
wherein said streaming server (2) sends a data stream to a peer computer (5-0) according to a predetermined data distribution tree via said core network (3),
wherein the peer computer (5-0) relays said data stream via local connections (7-1, 7-2) to other devices (5-1, 5-2) in its vicinity and
wherein said devices (5-1, 5-2) are peer computers connected by means of a wired link to said core network (3).

**2.** The peer-to-peer network according to claim 1,
wherein said local connections (7-1, 7-2) are wireless local area connections.

**3.** The peer-to-peer network according to claim 1,
wherein said local connections (7-1, 7-2) are wired local area connections.

**4.** The peer-to-peer network according to claim 3,
wherein said wired local area connections (7-1, 7-2) are power line connections or data lines of a data bus.

**5.** The peer-to-peer network according to claims 1 to 4,
wherein said peer computer (5-0) is connected to said core network (3) via a symmetric or asymmetric broadband connection (6-0).

**6.** The peer-to-peer network according to claim 5,
wherein said broadband connection (6-0) is a DSL-connection.

**7.** The peer-to-peer network according to claim 1,
wherein said devices (5-1, 5-2) forward the data stream to other devices (5-5) of said peer-to-peer network (1) which are lower down in said distribution-tree of said peer-to-peer network (1).

**8.** A peer computer (5-0) of a peer-to-peer network (1) which relays a data stream received from a streaming server (2) by means of a core network (3) via local network connections (7-1, 7-2) to other devices (5-1, 5-2) in its vicinity according to a predetermined data distribution tree of said peer-to-peer network (1),
wherein said devices (5-1, 5-2) are peer computers connected by means of a wired link to said core network (3).

**9.** A method for streaming data between computers of a peer-to-peer network (1) according to a predetermined data distribution-tree of said peer-to-peer network (1),
wherein a computer (5-0) of said peer-to-peer network (1) which receives a data stream from a core network (3) relays said data stream via local network connections (7-1, 7-2) to other devices (5-1, 5-2) in its vicinity,
wherein said devices (5-1, 5-2) are peer computers connected by means of a wired link to said core network (3).

**10.** A computer program comprising commands for performing the method according to claim 9.

**11.** A data carrier which stores a computer program according to claim 10.
